Europäisches Patentamt

European Patent Office

Office européen des brevets

(19)

(11) Publication number: **0 134 848**
A1

(12) **EUROPEAN PATENT APPLICATION**

(21) Application number: **83304587.5**

(22) Date of filing: **09.08.83**

(51) Int. Cl.⁴: **E 05 D 15/06**
**F 16 C 13/00, F 16 C 19/02**

(43) Date of publication of application:
**27.03.85 Bulletin 85/13**

(84) Designated Contracting States:
**AT DE FR GB IT SE**

(71) Applicant: **ANTHONY BEARINGS PTY. LTD.**
**68 Keon Parade**
**Keon Park, Vic. 3073(AU)**

(72) Inventor: **Stagoll, Dennis John**
**68 Keon Parade**
**Keon Park, Vic. 3073(AU)**

(74) Representative: **Lucas, Brian Ronald et al,**
**Lucas, George & Co. 135 Westhall Road**
**Warlingham Surrey CR3 9HJ(GB)**

(54) **Bearing.**

(57) A carriage comprising two spaced apart, adjacent and at least substantially parallel surfaces (2, 3), co-axial recesses (21) in said surfaces defining outer bearing races and which contain a ring of balls (23), and a rotary element (124, 224, 324, 424, 524) having an axis of rotational symmetry; which element being entirely supported by said balls against radial loads and wherein said element has portions (143, 343, 443) defining inner bearing races for said balls and a portion defining a surface (141, 241) for running along a track.

FIG. 1.

EP 0 134 848 A1

Croydon Printing Company Ltd.

This invention relates to a bearing.

Problems arise with sliding doors and windows particularly those made of aluminium in avoiding frictional resistance with a track along which the door or window slides.

Up to a certain size simple physical contact of the material of the door or the material of a window with the material of the track or the use of skidding blocks will not produce an excess of friction if surfaces are clean and free of defects such as corrosion, paint blisters and dirt.

Above that certain size some form of bearing is desirable.

One particular common form of bearing utilizes two spaced cheek plates, a roller wheel located between the cheek plates and an axle which passes through the roller wheel and which is located in aligned holes in the cheek plates.

One particular difficulty arises in the case of doors or windows in which the door or window has a perimetric frame supporting a panel material or glass and that perimetric frame is an aluminium extrusion.

Since such extrusions have good strength to cross-section characteristics there is a tendency to make such frames very small so as to maximize the panel material or glass and to minimize the frame.

However, such minimal size frames do not provide much space for such a roller wheel and axle bearing and we are not able to adopt the procedure, which we normally apply to wooden frame doors or windows which usually have a lower rail of at least 100 mm height, of making the size of the roller wheel and axle bearing and in particular its roller wheel and axle appropriate to the weight of the door or window.

Indeed, such roller wheel and axle bearings for use with aluminium extrusions can rarely be permitted to be more than 25 mm high and more commonly must be no more than 15 mm high whereas for wooden framed doors and windows we can often use such roller wheel and axle bearings of heights up to and exceeding 100 mm.

Thus, the aluminium extrusions which are used impose limits on the size of the roller wheel and its axle and in consequence when large doors and windows are contemplated severe friction can result which mades it hard to open the doors and windows.

The present invention provides a carriage comprising two spaced apart, adjacent and at least substantially parallel surfaces, co-axial recesses in said surfaces defining outer bearing races and which contain a ring of balls, and a rotary element having an axis of rotational symmetry; which element being entirely supported by said balls against radial loads and wherein said element has portions defining inner bearing races for said balls and a portion defining a surface for running along a track.

It is particularly preferred that the construction is such that said element is entirely supported by said balls against thrust loads.

Said element may take a number of forms. In one form the element comprises an axle portion. That axle portion preferably has ends for co-operation with said balls such that said balls will take thrust as well as radial loads. In one preferred instance said axle portion had frustoconic ends. In another preferred instance said axle portion had annular grooves in its ends having cross-sections being substantially an arc of a circle.

Said surface might be a wheel attached to said axle portion.

Said surface is preferably integrally formed with said axle portion.

In one particular instance said element was itself a spherical ball and in this instance at any one time portions of the spherical surface would act as said inner races and other portions would act as said surface for running along a track.

It is particularly preferred that said surface for running along a track has a diameter greater than that of the diameters of the circles of balls.

The diameters of the circles of balls are preferably substantially the same.

Said co-axial recesses are preferably annular grooves having cross-sections being substantially an arc of a circle.

The carriage preferably comprises a body which itself defines said parallel surfaces or which carries means defining said surfaces. In the last instance said means may be bearing cups. In the former instance said body has said co-axial recesses therein.

Said body is preferably comprised of two at least substantially identical portions which may be secured together by any practical means but which preferably have male and female portions adapted to snap-fittingly engage with one another.

The axis of said surface for running along a track is preferably offset from a central plane through the body lying perpendicular to the height of the body. This will enable the body to be mounted in two orientations having different effective height of the end of the body that is then upper with respect to the part of the element able to contact the track.

Said body preferably has mating means adapted to enable another such body to be matingly joined end to end with the first mentioned said body whereby to provide a double carriage. Further such carriages can be similarly joined. The mating means is preferably provided by projections and recesses in the ends of said body. Those projections and recesses are preferably dovetail shape. Those projections and recesses are preferably offset similarly as with respect to said surface so as to permit only a single orientation of mating joining.

The carriage is conveniently formed of synthetic plastics material.

Specific constructions of a carriage in accordance with this invention will now be described with the aid of the accompanying drawings in which:-

Fig. 1 is an exploded perspective view of the carriage in accordance with this invention,

Fig. 2 is a side elevation of the carriage,

Fig. 3 is a cross-section on line 3-3 in Fig. 2,

Fig. 4 is a perspective view of a part of the carriage, and

Figs. 5-7 are perspective views of alternative parts to the part shown in Fig. 4.

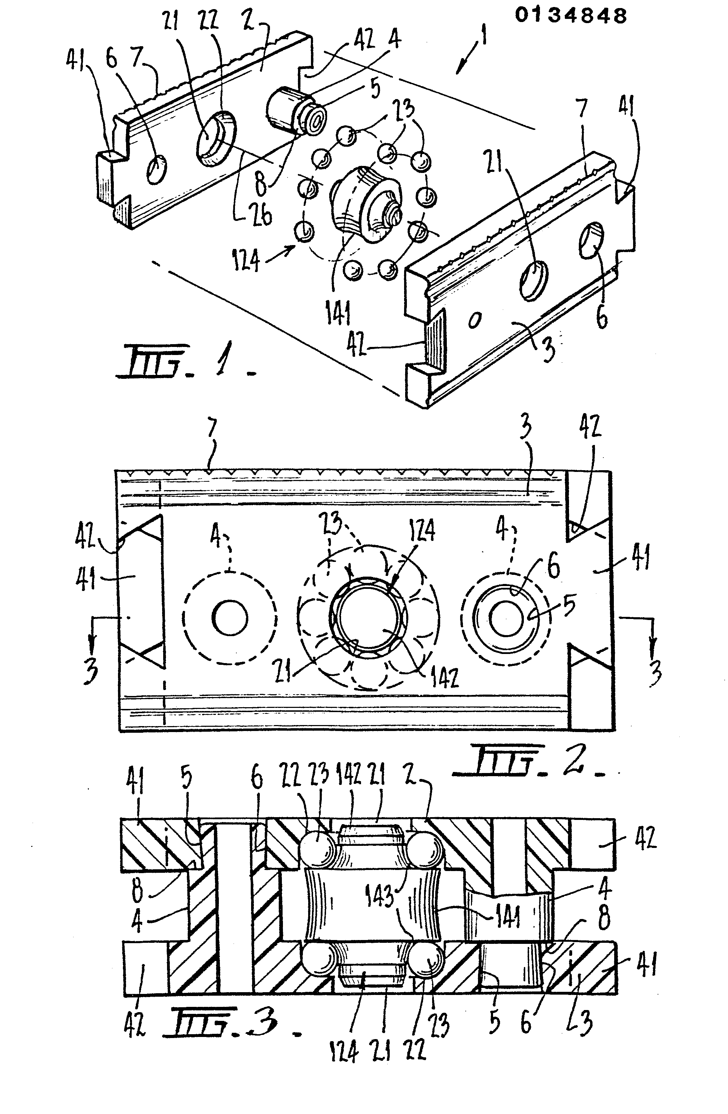

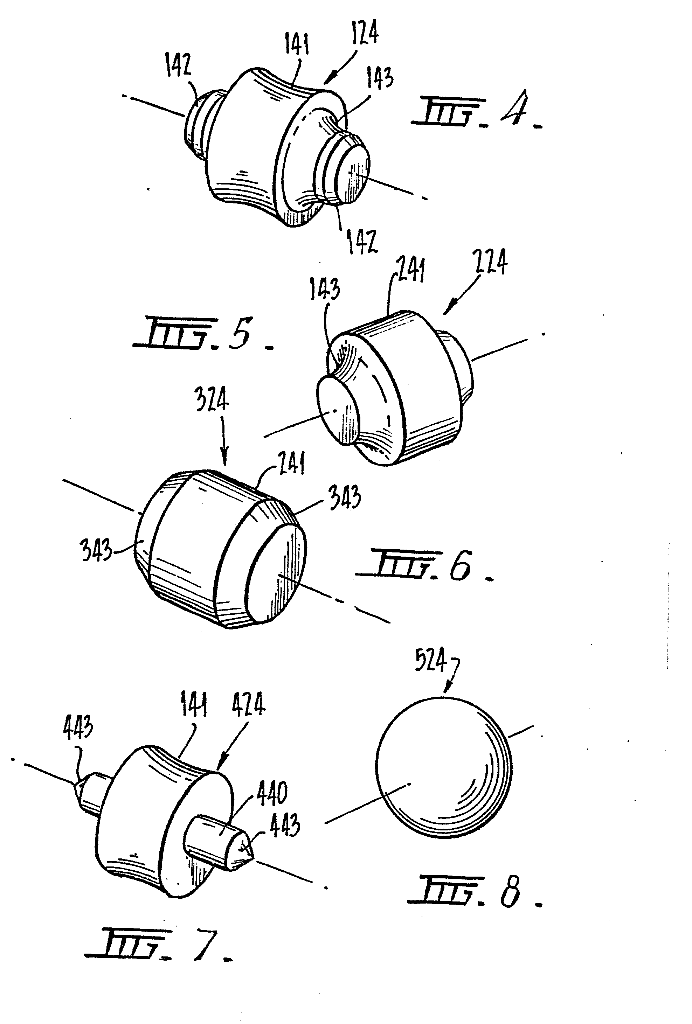

The carriage 1 shown in Figs. 1-3 comprises two plates 2 and 3 which are mirror images and which have projections 4 having slight reverse taper at 5 and holes 6 in which those reverse taper portions at 5 fit when the plates are oriented as shown in Fig. 1.

Slots may be provided to enable the holes 6 to enlarge as the reverse taper portions at 5 are pushed thereinto during assembly.

The projections 4 have abutments 8 which space the plates 2 and 3 a predetermined distance apart.

Plates 2 and 3 have apertures 21 and recesses 22 of annular shape.

A circle of balls 23 is located in each of the annular recesses 22 and support a roller 124.

The roller 124 has a shaped track running surface 141 and narrowed ends 142 which in board have a shaping 143 appropriate for engagement with the balls 23.

In lieu of the roller 124 it would be possible to use the roller 224 shown in Fig. 5 which has a cylindrical track running surface 241, the roller 324 shown in Fig. 6 which has frusto-conical ends 343 on which the balls 23 can run, the roller 424 shown in Fig. 7 which has an axle 440 with conic or frusto-conic tapered end 443 on which the balls 23 can run or a sphereical ball 524 shown in Fig. 8.

The circle of balls 23 may or may not be full complement of balls.

In use the carriage 1 can be snapfitted into an aluminium extrusion forming part of a window frame with the roller 124 running on a track.

It should be noted that the axis of the roller 124 lies on line 26 which is not coincident with half the height of the plates 2 and 3 as shown in Fig. 1. Thus, limited and simple height adjustment of the window frame can be had merely by inverting the carriage 1 and for the purposes of identification the edges 7 have serrations.

To enable a number of such carriages to be joined together, such as may be desired if a load is to be carried greater than the load capacity of a single such carriage, the ends of the carriage is provided with male (41) and female (42) dovetail means which can join to another such carriage. Those male (41) and female (42) dovetail means are similarly non-coincident with half the height of the plates 2 and 3 as is the roller 124.

Various modifications can be made such as making the plates 2 and 3 identical each with one projection 4 and one hole 6 so that two such identical plates may be snap-fittingly engaged together.

Other modifications include securing the plates 2 and 3 together by rivets or other means in lieu of the projections 4 and holes 6.

Ball retainers may be provided.

Preferred material for the plates 2 and 3 is synethetic plastics materials.

The roller 124 and its alternatives are conveniently made of steel or stainless steel but in many instances the roller 124 and its alternatives may be made of synthetic plastics materials.

0134848

We have had success in forming good quality carriages capable of supporting loads of over 15 kg. yet with a height of the plates 2 and 3 of not more than 17 mm.

Modifications and adaptations may be made to the above described without departing from the spirit and scope of this invention which includes every novel feature and combination of features disclosed herein.

The claims form part of the disclosure of this specification.

CLAIMS

1.      A carriage comprising two spaced apart, adjacent
and at least substantially parallel surfaces (2, 3),
co-axial recesses (21) in said surfaces defining outer
bearing races and which contain a ring of balls (23),
and a rotary element (124, 224, 324, 424, 524) having an
axis of rotational symmetry; which element being
entirely supported by said balls against radial loads
and wherein said element has portions (143, 343, 443)
defining inner bearing races for said balls and a portion
defining a surface (141, 241) for running along a track.

2.      A carriage as claimed in claim 1, wherein the
construction is such that said element is entirely
supported by said balls against thrust loads.

3.      A carriage as claimed in claim 1, or claim 2,
wherein said element comprises an axle portion (143, 343,
440).

4.      A carriage as claimed in claim 3, wherein said
axle portion has ends for co-operation with said balls
such that said balls will take thrust as well as
radial loads.

5.      A carriage as claimed in any preceding claim,
wherein said surface has a diameter (141, 241) greater
than that of the diameters of the circles of balls.

6.      A carriage as claimed in any preceding claim,
including a body (2,3) which itself defines said parallel
surfaces or which carries means defining said surfaces.

7.      A carriage as claimed in claim 6, the axis of
said surface (141, 241) for running along a track is
offset from a central plane through the body perpendicular
to the height of the body.

8.      A carriage as claimed in any preceding claim,
wherein the carriage has a height of 17 mm or less.

9.    A carriage substantially as hereinbefore described with reference to any one of the accompanying drawings.

0134848

FIG. 1.

FIG. 2.

FIG. 3.

0134848

FIG. 4.

FIG. 5.

FIG. 6.

FIG. 7.

FIG. 8.

European Patent
Office

**EUROPEAN SEARCH REPORT**

**0134848**

Application number

EP 83 30 4587

## DOCUMENTS CONSIDERED TO BE RELEVANT

| Category | Citation of document with indication. where appropriate, of relevant passages | Relevant to claim | CLASSIFICATION OF THE APPLICATION (Int Cl 4) |
|---|---|---|---|
| A | US-A-3 996 643 (J.F. STEIGERWALD) --- | | E 05 D  15/06<br>F 16 C  13/00<br>F 16 C  19/02 |
| A | DE-U-1 986 135 (H. VOM STEIN oHG) ----- | | |

**TECHNICAL FIELDS SEARCHED (Int. Cl.4)**

E 05 D  15/00
E 06 B   3/00
F 16 C  13/00
F 16 C  19/00
F 16 C  33/00

The present search report has been drawn up for all claims

| Place of search<br>BERLIN | Date of completion of the search<br>23-08-1984 | Examiner<br>HOFFMANN M.P. |
|---|---|---|